# EUROPEAN PATENT APPLICATION

(11) **EP 4 166 248 A1**
(43) Date of publication of application: **19.04.2023**
(21) Application number: 21920124.1
(22) Date of filing: 15.11.2021
(51) Int. Cl.: B09B 3/20, C01F 11/46

(54) **METHOD FOR TREATING WASTE GYPSUM BOARD AND FLUID TANK TYPE CALCINATION DEVICE USED THEREFOR**

(30) Priority: 02.09.2021 JP 2021143114
(71) Applicant: Tokuyama Corporation, Shunan-shi, Yamaguchi 745-8648 (JP)
(72) Inventor: HIRANAKA, Shingo, Yamaguchi 745-8648 (JP)
(74) Representative: Marks & Clerk LLP
(86) International application number: PCT/JP2021/041843
(87) International publication number: WO 2023/032235

(57) **Abstract**

Gypsum granular solid obtained by crushing wasted gypsum boards is calcined and converted to hemihydrate and/or anhydrous type III gypsum. The gypsum granular solid is fed by a feeding device from a feed port into a fluidized-bed of a calcining apparatus. The gypsum granular solid after calcination is discharged by a discharging device from a discharge port of the fluidized-bed. The amount of the gypsum granular solid in the fluidized-bed is maintained within a predetermined range by controlling the feeding device and the discharging device. The generation of anhydrous type II gypsum is reduced, and the calcining apparatus can be operated stationarily.

## Description

### Technical Field

The present invention relates to a method for processing wasted gypsum boards and a fluidized-bed calcining apparatus therefor.

### Background Art

The Inventor and others have proposed a method for reclaiming gypsum from wasted gypsum boards (e.g., Patent Document 1: WO2012/176688). The wasted gypsum boards are first crushed by a crusher and then calcined by a calcining apparatus to convert the dihydrate gypsum contained in the wasted gypsum boards into hemihydrate gypsum. Since hemihydrate gypsum is easily hydrated, gypsum particles can be deposited from gypsum slurry in a crystallization tank. Gypsum particles are then separated from the gypsum slurry by solid-liquid separation and are reclaimed from the wasted gypsum boards. Anhydrous type III gypsum can be used instead of hemihydrate gypsum, and by controlling the temperature of the crystallization tank, the form of deposited gypsum particles is controlled among dihydrate gypsum, hemihydrate gypsum, etc.

### Prior Document List

### Patent Document

Patent document 1 WO2012/176688

### Summary of the Invention

### Problem to be Solved

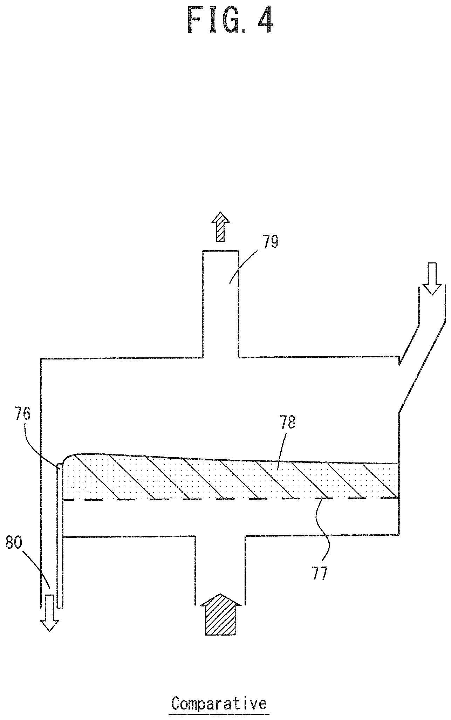

Fluidized-bed calcining apparatuses have been used since they have high heat-transfer efficiency. Fluidized-bed calcining apparatuses introduce hot air into the fluidized-bed from below and heat powder in the fluidized-bed by the hot air. The granular solid moves from the inlet to the outlet of the fluidized-bed while flowing by the hot air. An example of a fluidized-bed calcining apparatus is shown in Fig. 4. The powder is fed from one end of the fluidized-bed in the longitudinal direction, and the calcined powder is discharged from the other end. A dispersion plate 77 with numerous openings is provided at the bottom of the fluidized-bed to blow the hot air to heat and flow the powder 78, and the hot air is exhausted from the top of the fluidized-bed. A barrier plate 76 is provided at the outlet side, and the amount of powder in the fluidized-bed is controlled by raising and lowering the barrier plate 76.

However, the present inventor has found that fluidized-bed calcining apparatuses have a problem with calcining gypsum granular solid made from crushed wasted gypsum boards. The gypsum granular solid made from crushed wasted gypsum boards has a wide particle size distribution. This is because starch and other binders contained in the wasted gypsum boards make the gypsum granular solid sticky. In addition, when the wasted gypsum boards are wetted by rain, etc., the gypsum granular solid becomes more sticky. Because of them, it is difficult to classify the gypsum granular solid into a narrow particle size range.

We calcined gypsum granular solid having a wide particle size distribution in a fluidized-bed calcining apparatus with a barrier plate 76. In an operation condition at an air velocity where large size particles could pass over the barrier plate 76, small size particles were quickly scattered toward an exhaust line 79, and the amount scattered became 40-60 mass% of the total gypsum fed in. These particles were discharged from the calcining apparatus in a short time, part of the discharged gypsum remained as the initial dihydrate gypsum. As a remark, gypsum suitable for crystallization is hemihydrate or anhydrous type III gypsum. The particles scattered into the exhaust line 79 were collected by a bag filter. The particles collected by the bag filter were merged with the discharged gypsum from the outlet 80 after calcination. The dihydrate gypsum after the merge should be up to 5 mass%. When above 5 mass%, the average particle size of the dihydrate gypsum generated in the crystallization process decreased. However, under the above condition, the remaining dihydrate gypsum was 10 mass% or more due to the high amount of scattering.

On the other hand, when the air velocity was reduced to reduce the scattering of small particles, particles with large diameters did not pass over the barrier plate and remained in the calcining apparatus. As the amount of remaining particles increased, the operation of the fluidized-bed became unstable and it eventually became inoperable. In addition, the gypsum remained in the fluidized-bed became anhydrous type II gypsum not suitable for crystallization.

We have considered providing an outlet at the bottom of the barrier plate 76 to discharge large particle size gypsum particles. However, the gypsum granular solid crushed from wasted gypsum boards has low fluidity, and the outlet could not discharge the desired volume of gypsum granular solid. Therefore, a portion of the large gypsum particles was converted to anhydrous type II gypsum, and it was difficult to operate the calcining apparatus in a steady state.

The object of the present invention is to provide a method for calcining gypsum granular solid crushed from wasted gypsum boards into hemihydrate and/or anhydrous type III gypsum, instead of anhydrous type II gypsum, and for operating the calcining apparatus in a steady-state. The further object of the present invention is to provide a fluidized-bed calcining apparatus suitable for the method.

### Means for Solving the Problem

In a method for processing wasted gypsum boards according to the invention, gypsum granular solid obtained by crushing wasted gypsum boards is calcined and converted to hemihydrate and/or anhydrous type III gypsum. According to the method, the gypsum granular solid is fed by a feeding device from a feed port into a fluidized-bed of a calcining apparatus; the gypsum granular solid after calcination is discharged by a discharging device from a discharge port of the fluidized-bed; and the amount of the gypsum granular solid in the fluidized-bed is maintained within a predetermined range by controlling the feeding device and the discharging device.

A calcining apparatus according to the invention is for calcining gypsum granular solid derived from wasted gypsum boards. The calcining apparatus according to the invention is provided with a fluidized-bed; a feed port provided with a feeding device for feeding the gypsum granular solid; a discharge port provided with a discharging device for discharging the gypsum granular solid; and a controller for controlling the feeding device and the discharging device and maintaining the amount of the gypsum granular solid in the fluidized-bed within a predetermined range. In the specification, descriptions of the method of processing wasted gypsum boards, especially the descriptions of the calcination process, apply to the fluidized-bed calcining apparatus as they are.

Preferably, the gypsum granular solid is moved from a outlet end of a dispersion plate at a bottom of the fluidized-bed toward the discharge port without passing over a barrier. Gypsum granular solid reaching the outlet end of the fluidized-bed flows and moves toward the discharge port and is discharged by the discharging device.

Since there is no barrier plate according to the present invention, it is enough that large size particles move laterally over the dispersion plate. Since the amount of airflow required for the lateral movement is not large, the amount of small size gypsum particles leaving the fluidized-bed as dihydrate gypsum is reduced. For example, gypsum remaining dihydrate after calcination is reduced to less than 5 mass%.

Preferably, the fluidized-bed is provided at a bottom portion of the fluidized-bed with a dispersion plate for blowing hot air into the fluidized-bed, and the outlet end of the dispersion plate toward the discharge port is connected toward the discharge port without a barrier such as a barrier plate.

According to the invention, the amount of gypsum granular solid in the fluidized-bed is adjusted by increasing and decreasing the amount of gypsum fed into and discharged from the fluidized-bed, not by controlling the height of the barrier plate. For example, to increase the amount of gypsum granular solid in the fluidized-bed, the feeding amount is increased or the discharging amount is decreased. When the predetermined amount of gypsum granular solid becomes present in the fluidized-bed, the feeding amount and the discharging amount are controlled at the same amount, and steady state operation is performed. The amount of gypsum granular solid in the fluidized-bed can be measured by the pressure difference between the top and bottom of the dispersion plate. Keeping the feeding amount of gypsum constant and increasing and decreasing the discharging amount of gypsum is included in controlling the feeding device and the discharging device.

Preferably, the hot air is blown into the fluidized-bed through the dispersion plate at the bottom of the fluidized-bed and the hot air is exhausted from an exhaust port at the top of the fluidized-bed. The fluidized-bed is made larger in width at the upper portion of the fluidized-bed than that at the lower portion of the fluidized-bed. This reduces the velocity of the hot air at the upper portion of the fluidized-bed, precipitates gypsum granular solid (mainly small particle size solid) floating in the hot air, and restricts that the small particle size gypsum granular solid is exhausted in a short time from the fluidized-bed.

Preferably, the dispersion plate is downward inclined from the side toward the feed port toward the discharge port side. Then, the whole of the gypsum in the fluidized-bed moves toward the discharge port, and it is prevented that large particle size gypsum remains for a long time in the fluidized-bed.

Preferably, a cyclone is provided in the exhaust line from the fluidized-bed. The cyclone collects relatively large gypsum particles scattered into the exhaust line and returns them to the fluidized-bed. The collected gypsum particles aggregate and grow in size while circulating in the cyclone and fluidized-bed and become not scattered from the exhaust line.

### Brief Description of Drawings

Fig. 1: A summary view indicating the reclaiming method of gypsum from wasted gypsum boards according to the embodiment.
Fig. 2: A schematic cross-sectional view indicating the fluidized-bed calcining apparatus according to the embodiment, along the vertical plane in the feed direction.
Fig. 3 A schematic cross-sectional view of the fluidized-bed calcining apparatus of Fig. 2 along the vertical plane in the width direction.
Fig. 4: A schematic cross-sectional view of a comparative example of a fluidized-bed calcining apparatus.

### Features for Carrying out the Invention

One embodiment for carrying out the invention will be described. The scope of the present invention shall be determined based on the claims, taking the specification and well-known arts in the field in consideration, and in accordance with the understanding of those skilled in the art. The scope of the invention is not limited by the embodiment.

### Embodiment

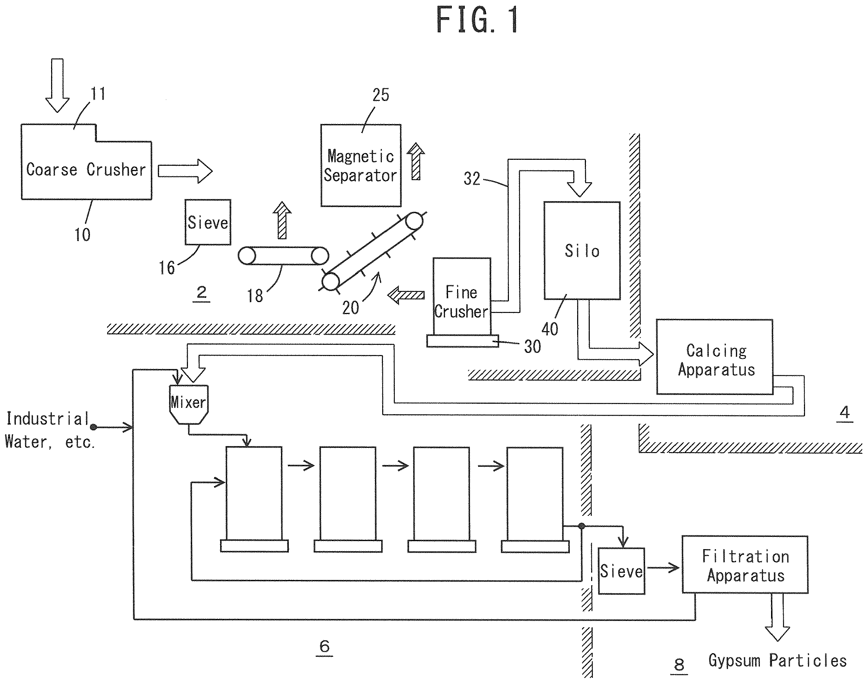

Figs. 1-3 indicate the embodiment. Fig. 1 shows the process for reclaiming gypsum from wasted gypsum boards. In the pre-processing step 2, wasted gypsum boards, not shown in the figure, are fed into a coarse crusher 10 from an inlet port 11 and crushed coarsely. The crushed pieces are separated by a sieve 16, and the crushed pieces remaining over the sieve are fed to a sorting conveyor 18 to remove foreign matter such as metal, wood chips, mortar, etc., manually. The gypsum granular solid that passed the sieve and is under the sieve is fed to a fine crusher 30 that will be described. The crushed pieces after the foreign matter removal are conveyed by a metering conveyor 20. A magnetic separator 25 is installed near the metering conveyor 20 and removes metallic foreign matters and other magnetizable matters by magnetic attraction. The crushed pieces are then fed to a fine crusher 30 and are crushed into gypsum granular solid having a suitable size for calcination and crystallization. Then, they are transferred to and stocked in a silo 40 through a magnetic separation pipe 32.

In the next calcination process 4, the gypsum granular solid is calcined and changed from dihydrate gypsum to hemihydrate and/or anhydrate type III gypsum by a fluidized-bed calcining apparatus 50.

In the crystallization process 6, the hemihydrate and/or anhydrous type III gypsum obtained by calcination is mixed with a slurry of gypsum, etc. in a mixer, and gypsum particles such as dihydrate gypsum are deposited in a crystallization tank. In the last filtration process 8, the gypsum slurry is extracted from the crystallization tank, paper dust, etc. are removed by a sieve, and the remaining slurry is solid-liquid separated by a filtration apparatus, and gypsum powder such as dihydrate gypsum powder is reclaimed. The liquid component after the solid-liquid separation is added with industrial water, etc. and recirculated to the mixer.

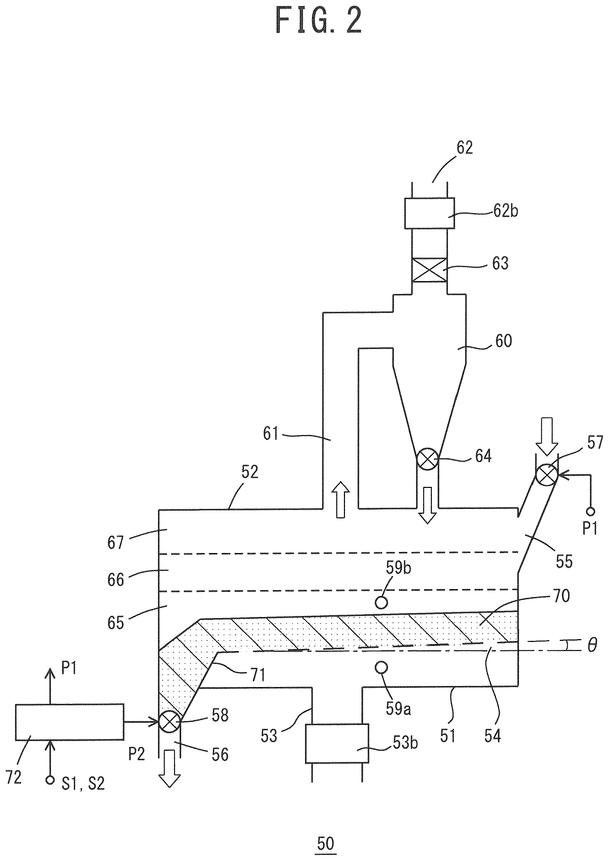

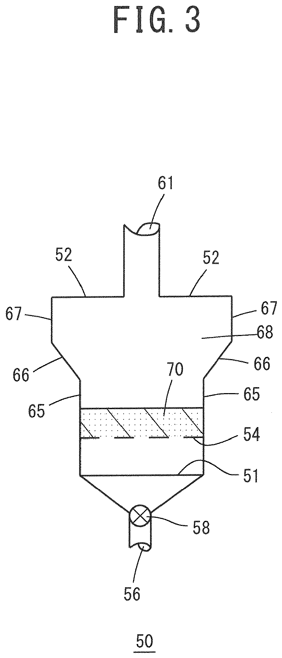

The calcination process and the fluidized-bed calcining apparatus 50 therefor (hereinafter referred to as "calcining apparatus 50") are described with reference to Figs. 2 and 3.

The calcining apparatus 50 has a bottom plate 51 and a top plate 52, and hot air at about 300 degree Celsius, for example, is supplied from an air supply port 53 by an air supply blower 53b. A dispersion plate 54 is provided over the bottom plate 51, and the hot air is introduced through openings of the dispersion plate 54. Preferably, the dispersion plate 54 is inclined downward at an inclination angle θ from the inlet side to the outlet side. The inclination angle θ is, for example, between 0.5 degree and 5 degrees, preferably between 1 degree and 3 degrees. The space between the dispersion plate 54 and the top plate 52 is the fluidized-bed 68.

The outlet end of the dispersion plate 54 toward the discharge port 56 is connected to an inclined plate 71 at the inlet of the discharge port 56 without any barrier such as a barrier plate.

Gypsum granular solid is fed in through a feed port 55 and is discharged through a discharge port 56. To maintain the fluidized-bed at a constant pressure, a rotary valve 57 is provided at the feed port 55 and another rotary valve 58 at the discharge port 56 such that the fluidized-bed is insulated from the outside air while feeding and discharging. Other devices, such as double dampers, than the rotary valves 57 and 58, can be used if they can insulate the fluidized-bed from the outside air while feeding and discharging and they can control the feeding amount and the discharging amount.

The amount of gypsum 70 in the calcining apparatus 50, namely, in the fluidized-bed, is calculated according to the pressure difference measured by pressure sensors 59a, b. The pressure sensor 59a measures the pressure of the hot air between the bottom plate 51 and the dispersion plate 54. The pressure sensor 59b measures the pressure of the hot air between gypsum 70 and the top plate 52. The difference between these pressures indicates the pressure that the hot air loses during passing through the gypsum 70 and represents the amount of gypsum 70. Any sensor that can measure the amount of gypsum 70 can be used.

An exhaust line 61 is connected to the top plate 52 and its outlet is connected to a cyclone 60. The airflow to the top of the cyclone 60 is treated by a bag filter 63 and is exhausted by an exhaust blower 62b from an exhaust port 62. The bag filter 63 is connected to a rotary valve (not shown) for discharging the collected gypsum particles without returning to the calcining apparatus and merging with the gypsum from the discharge port 56. The gypsum granular solid collected by the cyclone 60 is returned to the fluidized-bed by a rotary valve 64.

As shown in Fig. 3, the fluidized-bed has three types of sidewalls 65, 66, 67, and the upper portion of the fluidized-bed is wider than the bottom portion. Therefore, the velocity of hot air is reduced at the upper portions of the fluidized-bed.

The inclined plate 71 in front of the discharge port 56 is connected to the outlet end of the dispersion plate 54 without a barrier plate or other barrier. The controller 72 receives signals S1, S2 from the pressure sensors 59a, 59b, estimates the amount of gypsum 70 in the fluidized-bed, and controls the rotary valves 57, 58 with control signals P1 and P2.

. The following is an example of the size, etc., of the calcining apparatus 50. The hot air is, for example, at about 300 degree Celsius at the air inlet 53 and for example at about 150 degree Celsius at the inlet of the exhaust line 61. The velocity of the hot air in the fluidized-bed is about 1 to 2 m/s, for example. The target heating temperature of gypsum 70 is about 130 degree Celsius, for example. The dispersion plate 54 is, for example, 5m long and 1m wide, and the distance from the dispersion plate 54 to the top plate is, for example, 3 m. The thickness of the deposited gypsum 70 is, for example, 200 mm to 400 mm, and the amount of gypsum in the fluidized-bed is, for example 600-1200 kg. The average staying duration of gypsum in the fluidized-bed is about 20 to 40 minutes.

The function of the calcining apparatus 50 will be described. The controller 72 controls the rotary valves 57, 58 to keep the amount of gypsum 70 in the fluidized-bed constant. Since the discharge of gypsum granular solid is controlled by the rotary valve 58, instead of a barrier plate, the gypsum granular solid needs only to flow from right to left in Fig. 2 and does not need to pass over a barrier plate. Therefore, the difference in staying duration between large and small gypsum particles is reduced.

Since gypsum granular solid need only to be moved laterally, the amount of necessary hot air is reduced. Therefore, the amount of scattering of gypsum granular solid into the exhaust line 61 is reduced. This also reduces small particle gypsum granular solid reaching the bag filter 63 as dihydrate gypsum.

Because the dispersion plate 54 is inclined toward the exit (the inclined plate) at an angle θ, the gypsum 70 moves toward the exit. Since the fluidized-bed is wider at the top, the velocity of hot air decreases at the top of the fluidized-bed, and small floating gypsum particles precipitate. This prevents small gypsum particles from reaching the discharge port 56 in a short time and further reduces the amount of scattering into the exhaust line 61. The combination of discharging gypsum by rotary valve 58 without a barrier plate, inclining the dispersion plate 54, and widening the width of the fluidized-bed at the top enables to discharge both large and small gypsum particles in a similar staying duration from the fluidized-bed. Of these three elements, the essential one is that the gypsum is discharged by the rotary valve 58 without a barrier plate.

The cyclone 60 collects gypsum fine particles in the exhaust line. The collected gypsum fine particles aggregate and grow in the cyclone and fluidized-bed, for example. This reduces the amount of gypsum fine particles reaching the bag filter 63.

### List of Symbols

- 2: pretreatment process
- 4: calcination process
- 6: crystallization process
- 8: filtration process
- 10: coarse crusher
- 11: inlet port
- 16: sieve
- 18: sorting conveyor
- 20: metering conveyor
- 25: magnetic separation device
- 30: fine crusher
- 32: magnetic separation pipe
- 40: silo
- 50: fluidized-bed calcining apparatus
- 51: bottom plate
- 52: top plate
- 53: air supply port
- 53b: air supply blower
- 54: dispersion plate
- 55: feed port
- 56: discharge port
- 57, 58, 64: rotary valve
- 59a, b: pressure sensor
- 60: cyclone
- 61: exhaust line
- 62: exhaust port
- 62b: exhaust blower
- 63: bag filter
- 65, 66, 67: side wall
- 68: fluidized-bed
- 70: gypsum
- 71: inclined plate
- 72: controller
- 76: barrier plate
- 77: dispersion plate
- 78: gypsum powder
- 79: exhaust line
- 80: exit
- θ: inclination angle

- P1, P2: control signal
- S1, S2: sensor signal

## Claims

1. A method for processing wasted gypsum boards, comprising calcining gypsum granular solid obtained by crushing wasted gypsum boards to convert the gypsum granular solid to hemihydrate and/or anhydrous type III gypsum, being **characterized**
**by** feeding the gypsum granular solid by a feeding device from a feed port of a fluidized-bed of a calcining apparatus into the fluidized-bed;
by discharging the gypsum granular solid after calcination by a discharging device from a discharge port of the fluidized-bed; and
by maintaining an amount of the gypsum granular solid in the fluidized-bed within a predetermined range by controlling said feeding device and said discharging device.

2. The method for processing wasted gypsum boards according to claim 1, being **characterized by** moving the gypsum granular solid from an outlet end toward the discharge port of a dispersion plate at a bottom of the fluidized-bed toward the discharge port without passing over a barrier.

3. The method for processing wasted gypsum boards according to claim 1 or 2, being **characterized**
**by** blowing hot air into the fluidized-bed through a dispersion plate at a bottom of the fluidized-bed and exhausting the hot air from an exhaust port at a top of the fluidized-bed,
and
by making a width of the fluidized-bed larger at an upper portion of the fluidized-bed than that at a lower portion of the fluidized-bed, reducing a velocity of the hot air at the upper portion of the fluidized-bed, and precipitating gypsum granular solid floating in the hot air.

4. The method for processing wasted gypsum boards according to one of claims 1 to 3,
being **characterized by** making said dispersion plate downward inclined from said feed port toward said discharge port and by moving the gypsum granular solid toward the discharge port thereby.

5. The method for processing wasted gypsum boards according to one of claims 1 to 4, being **characterized by** connecting an exhaust line provided with a cyclone to the fluidized-bed and by collecting a part of gypsum granular solid scattered into the exhaust line by the cyclone and returning collected gypsum granular solid to the fluidized-bed.

6. A calcining apparatus for calcining gypsum granular solid derived from wasted gypsum boards comprising:
a fluidized-bed;
a feed port provided with a feeding device for feeding the gypsum granular solid;
a discharge port provided with a discharging device for discharging the gypsum granular solid; and
a controller for controlling said feeding device and said discharging device and maintaining an amount of the gypsum granular solid in the fluidized-bed within a predetermined range.

7. The calcining apparatus according to claim 6, being **characterized in that** said fluidized-bed is provided at a bottom portion thereof with a dispersion plate for blowing hot air into the fluidized-bed and that outlet end of the dispersion plate toward the discharge port is connected toward the discharge port without a barrier.
